# NEW EUROPEAN PATENT SPECIFICATION

(11) **EP 3 282 337 B2**
(45) Date of publication and mention of the opposition decision: **24.05.2023**
(45) Mention of the grant of the patent: 15.01.2020
(21) Application number: 16183491.6
(22) Date of filing: 10.08.2016
(51) Int. Cl.: G05D 23/19, F24D 19/10

(54) **HEAT EXCHANGER SYSTEM AND METHOD FOR DETECTING A RELOCATION OF A TEMPERATURE SENSOR IN A HEAT EXCHANGER SYSTEM**
WÄRMETAUSCHERSYSTEM UND VERFAHREN ZUR DETEKTION EINER VERLAGERUNG EINES TEMPERATURSENSORS IN EINEM WÄRMETAUSCHERSYSTEM
SYSTÈME D'ÉCHANGEUR THERMIQUE ET PROCÉDÉ POUR DÉTECTER UNE TRANSLATION D'UN CAPTEUR DE TEMPÉRATURE DANS UN SYSTÈME D'ÉCHANGEUR THERMIQUE

(43) Date of publication of application: 14.02.2018
(73) Proprietor: Danfoss A/S, 6430 Nordborg (DK)
(72) Inventor: Clausen, Anders Østergaard, 8680 Ry (DK); Nielsen, Peter Gammeljord, 7100 Vejle (DK); Hesseldahl, Søren, 7182 Bredsted (DK)
(74) Representative: Patentanwälte Olbricht Buchhold Keulertz

(56) References cited:
- EP-A1- 1 645 324
- EP-A1- 1 645 324
- EP-A2- 2 068 138
- EP-A2- 2 442 038
- EP-B1- 1 158 250
- DE-A1- 3 704 778
- DE-A1- 4 025 323
- DE-A1- 4 025 323
- DE-A1- 19 749 623
- DE-B3-102004 020 292
- DE-U1- 29 710 248
- DE-U1-202016 101 631
- US-A1- 2007 018 830
- US-A1- 2007 018 830
- US-A1- 2013 081 799
- US-A1- 2013 081 799
- US-A1- 2014 100 673
- US-A1- 2014 100 673
- US-A1- 2015 187 194
- US-A1- 2015 187 194
- DIN EN 834: 2013-13, 2013

## Description

The present invention relates to a heat exchanger system comprising a heat exchanger and a temperature sensor arrangement.

Furthermore, the present invention relates to a method for detecting a relocation of a temperature sensor in the heat exchanger system.

From prior art, heat exchanger systems comprising the heat exchanger and the temperature sensor arrangement are known. For example, some heat exchanger systems comprise the heat exchanger having a thermostat head including two temperature sensors, one for monitoring an ambient room temperature and one for monitoring a valve temperature of the heat exchanger. This shall allow a precise setting of heat exchanger temperatures by using temperatures measured by each of the temperature sensors for estimating a room temperature and setting a fluid flow through the heat exchanger accordingly.

According to EP 1 645 324 A1, an anti-tampering device is attached to a radiator of a motor vehicle with an internal combustion engine. In order to detect the authenticity of the functionality of an ozone conversion of the radiator, a first and a second temperature sensor are connected to a control unit. The first temperature sensor is located at an inlet of the radiator or adjacent thereto and second temperature sensor is constituted of a general coolant temperature sensor of the vehicle. An anti-tampering device is attached to the radiator.

US 2013/0081799 A1 discloses a heating system comprising a heating device and a series of room heat exchangers. The room heat exchangers are connected in parallel between a supply line and a return line. Room heat exchanger valves are adjusted using actuators or motor units, and can be limited in each position by stops. The actuators are wirelessly connected or tethered to a central processing unit, which receives and processes data acquired by temperature sensors at a supply point and at a return point of each individual room heat exchanger, respectively.

However, it was found that despite such measures for some heat exchanger systems the setting of the heat exchanger temperature still is not adequate. Sometimes, for example, the fluid flow rate through the heat exchanger remains too low although the heating power provided by the heat exchanger is not adequate at the set flow rate which leads to the room temperature being below a desired level. In other cases, the flow rate is set too high although a desired room temperature is already reached.

The invention is defined by independent claims 1 and 8.

It is therefore an object of the invention to allow a good setting for the fluid flow through the heat exchanger which is adequately corresponding to the room temperature.

The object of the invention is solved by the heat exchanger system according to claim 1. In particular, the heat exchanger system comprises one or more electronic relocation detection units being adapted to detect by monitoring the temperature difference between the first temperature measured by the first temperature sensor and the second temperature measured by the second temperature sensor, whether one or more temperature sensors of the temperature sensor arrangement are relocated relative to the heat exchanger.

The inventors realized that one of the causes for inadequate fluid flow is that temperature sensors of temperature sensor arrangements sometimes become relocated, which may even mean removed, from heat exchanger systems, for example due to vandalism or with the intention to commit billing fraud. This may, for example, be a severe problem in large heating networks with many heat exchangers, like in public buildings, schools, hotels, or the like. Monitoring of each heat exchanger in such a large network can be time consuming and cost intensive.

Therefore, when the heat exchanger system comprises one or more electronic relocation detection units providing an electronic relocation detection function, monitoring whether one or more of the temperature sensors are relocated can become much easier. That a temperature sensor has been relocated is detected electronically so that the mounting location of the relocated temperature sensor may be readjusted in short time or a replacement temperature sensor may be installed in case the temperature sensor was fully removed. Thus, the room temperature estimate calculated from the temperature sensor measurements will be correct most of the time, leading to a good setting for the fluid flow through the heat exchanger which is adequately corresponding to the room temperature and preventing fraud.

Preferably, the heat exchanger system comprises a valve element and a valve actuator element. It is preferred that the valve element is arranged in a valve housing. The valve element is preferably arranged at an inlet pipe of the heat exchanger and adapted to control a heating or cooling fluid flow through the heat exchanger. However, in some embodiments the valve element is arranged at an outlet pipe or at a supply pipe which may be located before the inlet or after the outlet pipe, with respect to a fluid flow direction across the heat exchanger. An opening degree of the valve element may be monitored, preferably by the electronic relocation detection unit. In some embodiments, the opening degree may be used by the electronic relocation detection unit in order to detect whether one or more of the temperature sensors of the temperature sensor arrangement are relocated relative to the heat exchanger.

The temperature sensor arrangement comprises one or more temperature sensors, at least one electronic relocation detection unit being adapted to monitor a temperature change of at least one temperature measured by at least one of the temperature sensors. When hot or cold fluid is supplied via the inlet pipe to the heat exchanger, preferably by opening the valve element to a predetermined opening degree, a change in the temperature, for example an increase or a decrease, in at least one of the temperature sensors of the temperature sensor arrangement is expected. If no such change is detected, the electronic relocation detection unit preferably takes this as an indication that the temperature sensor arrangement was tempered with, thus at least one of the temperature sensors of the temperature sensor arrangement was relocated or removed relative to the heat exchanger.

In a preferred embodiment of the invention the temperature sensor arrangement comprises a first temperature sensor and a second temperature sensor, at least one electronic relocation detection unit being adapted to monitor a temperature difference between a first temperature measured by the first temperature sensor and a second temperature measured by the second temperature sensor. Monitoring the temperature difference between the first temperature and the second temperature allows to detect when one or both of the first temperature sensor and the second temperature sensor are relocated from their respective predetermined mounting location relative to the heat exchanger as the first temperature and/or the second temperature may change. For example, when the temperature difference changes and reaches a predetermined threshold, the electronic relocation detection unit may take this as an indication that one or both of the first temperature sensor and the second temperature sensor have been relocated. For example, if the temperature difference reaches the predetermined threshold or drops below and one of the first temperature sensor and the second temperature sensor detect the temperature above, for example, 30° C which is well above any expected room temperature, it is likely that both of the temperature sensors are still located on or close to the heat exchanger but have been relocated closer to each other so that their location may need to be adjusted. On the other hand, for example, if the temperature difference reaches or drops below the predetermined threshold and both of the temperature sensors detect a temperature below, for example, 30°C which is well below any expected temperature to be measured directly next to the heat exchanger, it is likely that both, the first temperature sensor and the second temperature sensor, have been completely removed from the heat exchanger and thus need to be replaced.

The electronic relocation detection unit is preferably adapted to send a warning when the temperature difference reaches or drops below the predetermined threshold. The warning is preferably an optical warning, an acoustical warning or an electrical signal, preferably a voltage output or a current output. The predetermined temperature difference threshold is preferably smaller than 50° C, more preferably smaller than 40° C, more preferably smaller than 30° C, more preferably smaller than 15° C and even more preferably smaller than 5° C. It is most preferred that the predetermined temperature threshold equals 0° C. This is in many embodiments a safe indicator that at least one of the first and the second temperature sensors have been moved as in general no two temperature sensors would show the same temperature when mounted at different predetermined mounting locations in a heat exchanger system. Therefore, when the temperature difference is 0° C, either both sensors are probably mounted at about the same location or both temperature sensors have been removed from the heat exchanger system.

In some embodiments the electronic relocation detection unit monitors a change of a response time of the temperature difference. For example, if the distance between the first temperature sensor and the second temperature sensor was increased, for example, due to relocating one or both of them, the response time of the temperature difference may increase. In this case, the electronic relocation detection unit may send a warning so that maintenance can be initiated.

The first temperature sensor is arranged closer to a heat exchanger inlet pipe than the second temperature sensor. It is preferred in some heat exchanger systems to measure an inlet temperature of the heat exchanger. Preferably, the first temperature sensor is arranged to measure the heat exchanger inlet temperature. The second temperature sensor is preferably arranged to detect a temperature different from that of the inlet temperature. Preferably, the second temperature sensor is arranged to measure a room temperature, also called ambient temperature, or a heat exchanger return temperature. The heat exchanger inlet temperature corresponds preferably to a temperature of the fluid flow entering the heat exchanger. The heat exchanger return temperature corresponds preferably to a temperature of the fluid flow leaving the heat exchanger. Measuring the input temperature with the first temperature sensor and a further temperature with the second temperature sensor allows to determine whether the fluid flow through the heat exchanger is adequate in view of the room temperature. Therefore, having the electronic relocation detection unit may be of great use in order to detect whether the temperature sensor arrangement remains in the desired location relative to the heat exchanger. Preferably, the first temperature sensor is mounted to the heat exchanger system by a mounting unit, the mounting unit preferably being a thermostat head. Preferably, the mounting unit includes one or more of at least one temperature sensor of the temperature sensor arrangement, one or more batteries, a data communication unit, the valve actuator, and the electronic relocation detection unit.

Preferably, the second temperature sensor is arranged thermally connected to a heat exchanger return pipe or arranged to measure a room temperature. Preferably, the second temperature sensor is mounted to the heat exchanger system by means of the mounting unit, preferably a mounting bracket. In some embodiments, the second temperature sensor is mounted to the heat exchanger return pipe by the mounting unit. This allows good measuring of the return temperature of the heat exchanger. In other embodiments, the second temperature sensor is mounted by means of the mounting unit so as to measure the room temperature. The mounting unit may in this case be the thermostat head. Thus, a dedicated mounting unit for the second temperature sensor may be omitted. However, the second temperature sensor may not only be mounted at the return pipe or arranged to measure the room temperature. Other locations, for example, on a surface or a rib of the heat exchanger, are possible as well in some embodiments.

The first temperature sensor and the second temperature sensor are included in the thermostat head, the first temperature sensor being arranged thermally connected to the heat exchanger inlet pipe and the second temperature sensor being arranged more distant from the heat exchanger inlet pipe than the first temperature sensor. Thus, the first temperature sensor is preferably mounted closer to the heat exchanger inlet pipe than the second temperature sensor. Preferably, the second temperature sensor is arranged at a longitudinal end of the thermostat head more distant from the heat exchanger input pipe than the first temperature sensor. In many heat exchanger systems, the thermostat head can be removed from the heat exchanger rather easily so that having the electronic relocation detection unit detecting whether one or more temperature sensors of the temperature sensor arrangement are relocated together with the thermostat head and relative to the heat exchanger may be very useful when the first temperature sensor and/or the second temperature sensor are included in the thermostat head. In case the electronic relocation detection unit detects that the first temperature sensor and/or the second temperature sensor are removed together with the thermostat head, the electronic relocation detection unit may send a warning, preferably in order to initiate maintenance and/or to detect fraud.

In another embodiment, the first temperature sensor is included in the thermostat head, the first temperature sensor being arranged thermally connected to the heat exchanger inlet pipe and the second temperature sensor being arranged thermally connected to the heat exchanger return pipe. The second temperature sensor is preferably mounted to the heat exchanger return pipe by means of an additional mounting unit. It is in some embodiments of interest to monitor the temperature difference between heat exchanger inlet and heat exchanger return. For example, a high temperature difference may indicate that the fluid flow needs to be increased. A low temperature difference on the other hand may indicate that the heat transfer between the room in which the heat exchanger system is installed and the heat exchanger needs to be improved. Therefore, it is of importance to monitor the mounting location of inlet temperature sensors and return temperature sensors and to detect by means of one or more electronic relocation detection units whether one or more of the temperature sensors are relocated relative to the heat exchanger. In some embodiments, the inlet temperature and the return temperature shall be measured so as to calculate heat cost allocation for billing of the used heat in, for example, a room or a house. In this situation, it can be extremely important to detect whether one or more of the temperature sensors of the temperature sensor arrangement are relocated relative to the heat exchanger. In some embodiments this is done by the electronic relocation detection unit monitoring the temperature change of at least one temperature measured by at least one of the temperature sensors. In other embodiments, the temperature difference between two temperature sensors is monitored by the electronic relocation detection unit. Both has been described in more detail above already.

It is preferred that at least one relocation detection unit is adapted to monitor whether a stroke length of the valve actuator element for controlling the fluid flow through the heat exchanger reaches a predetermined stroke length. In some embodiments, the stroke length is used as an indicator whether one or more temperature sensors of the temperature sensor arrangement are relocated relative to the heat exchanger. The valve actuator element is preferably arranged in the thermostat head. A preferred valve actuator element is a spindle. The valve actuator element drives the valve element in the valve housing being preferably arranged at the heat exchanger inlet pipe in order to control the fluid flow through the heat exchanger. Thus, the flow of the heating or cooling fluid may be controlled. When the predetermined stroke length is reached, the electronic relocation detection unit takes this as an indication that the thermostat head is relocated together with the one or more temperature sensors present in the thermostat head. Thus, when the one or more temperature sensors are removed or relocated together with the thermostat head from the heat exchanger, the electronic relocation detection unit will preferably send a warning to notify about the relocation of the temperature sensors. Thus, maintenance may be initiated and/or fraud may be detected.

Preferably, the predetermined stroke length equals a maximum stroke length. Preferably, the maximum stroke length is only reached when the thermostat head is removed from the valve housing. Therefore, this is a strong indication that the thermostat head is removed together with the one or more temperature sensors in the thermostat head. Thus, when the stroke length reaches 100 %, i.e. maximum, the electronic relocation detection unit may preferably send a warning. Then, maintenance may be initiated. However, in some embodiments the predetermined stroke length may be less than 100 %, preferably less than 90 %, preferably less than 75 %, preferably less than 60 % or preferably less than 50 %. On the other hand, the preferred predetermined stroke length is preferably more than 30 %, preferably more than 40 %, preferably more than 50 %, preferably more than 60 %, preferably more than 70 %, preferably more than 80 %, and most preferably more than 90 % of the maximum stroke length. As long as the predetermined stroke length is unlikely to be reached during normal use of the thermostat head, thus when it is mounted to the heat exchanger, it may be used as an indication for relocation of the thermostat head together with the included temperature sensors when the predetermined stroke length is reached.

It is preferred that the heat exchanger system comprises the thermostat head for controlling the valve of the heat exchanger, the thermostat head including one or more of the temperature sensors of the temperature sensor arrangement and a battery, at least one electronic relocation detection unit being adapted to monitor if the battery is present in the thermostat head. Some thermostat heads comprise the battery as a power supply. As a removal of the battery often coincides with a relocation or removal of the thermostat head itself, the electronic relocation detection unit may send a warning when an absence of the battery is detected, detecting a relocation of any temperature sensors arranged in the thermostat head together with the thermostat head as well. The detection may be based on mechanical, optical or electronical detection of the presence of the battery. Preferably, the electronic relocation detection unit monitors an electronic signal emitted by the thermostat head. A change in the signal may be taken as an indication that the battery was removed. For example, in some embodiments, the thermostat head stops to emit the signal once the battery is removed. Then the electronic relocation detection unit may interpret the absence of the signal as an indication that the temperature sensor arrangement included in the thermostat head was relocated relative to the heat exchanger.

In a preferred embodiment, the thermostat head comprises a data connection unit, at least one electronic relocation detection unit being adapted to monitor a presence of an electronic signal provided by the data connection unit. The data connection unit preferably provides a wireless connection between the thermostat head and another element of the heat exchanger system. Preferably, the wireless connection is a Bluetooth connection or a wireless LAN connection. Preferably, temperature data, more preferably the first temperature and/or the second temperature are sent via the data connection unit. For example, the thermostat head may be wirelessly connected to another mounting unit for data transfer and, preferably, vice versa. In some embodiments, the mounting unit is connected to an internet router and/or a central server by the data connection unit. This allows data transfer to a central data storage facility. When the battery is removed, the electronic signal of the wireless connection may vanish as the wireless connection collapses due to a power loss. The relocation detection unit preferably detects the collapse of the wireless signal and sends a warning, preferably over the data connection unit. Based on this, maintenance may be initiated and/or fraud may be detected. Even if the thermostat head and the included temperature sensors are still mounted to the heat exchanger system at least the battery may need to be replaced with a fresh one. In some embodiments, the data connection unit provides a wired data connection instead. Preferably, such a wired data connection is a serial, parallel or LAN-wired connection. Additionally or in the alternative, the mounting unit, preferably for the second temperature sensor, may comprise a wireless or wired data connection unit in order to transfer data, preferably the first temperature and/or the second temperature, preferably to the thermostat head or a central data storage.

It is preferred that at least one of the electronic relocation detection units is arranged in a common assembly together with one or more temperature sensors of the temperature sensor arrangement. The electronic relocation detection unit is preferably arranged in the mounting unit, preferably in the thermostat head. This allows good integration. Preferably, the electronic relocation detection unit is part of an electronic unit of the mounting unit. Thus, there may be a plurality of electronic relocation detection units in the system when there is a plurality of mounting units. For example, in some embodiments there is one relocation detection unit in each thermostat head and/or one electronic relocation detection unit in each corresponding mounting unit mounted to the same heat exchanger as the thermostat head. This preferably allows to monitor the removal of temperature sensors in the mounting unit, preferably mounted at the heat exchanger outlet pipe, using the relocation detection unit included in the corresponding thermostat head on the same heat exchanger and vice versa. Thus, preferably the thermostat head and the other mounting units mounted to the same heat exchanger are connected to each other via a data connection, preferably a wireless data connection. A preferred relocation detection unit comprises a microprocessor, preferably adapted to perform calculations, preferably on the basis of the first temperature and/or the second temperature. In some embodiments, the relocation detection unit is a microprocessor, embodied as a software on a data carrier, or built from electronic components.

Furthermore, the object of the invention is solved by a method as described in the outset according to claim 8, in which an electronic relocation detection function detects by monitoring the temperature difference between the first temperature measured by the first temperature sensor and the second temperature measured by the second temperature sensor, whether the temperature sensor is relocated relative to the heat exchanger.

This allows to detect an unwanted relocation quickly so that the temperature sensor can be reinstalled at its predetermined mounting location. Therefore, a good setting for the fluid flow through the heat exchanger which adequately corresponds to the room temperature becomes possible. In a preferred method, the electronic relocation detection function is provided by the electronic relocation detection unit.

The method comprises the step of the electronic relocation detection function monitoring a temperature change of at least one temperature sensor. Further preferred features of this method were already described in view of the heat exchanger system further above.

Preferably, the method comprises the step of the electronic relocation detection function monitoring whether the stroke length of the valve actuator element reaches the predetermined stroke length. Further preferred features were as well already described above with reference to the heat exchanger system.

It is furthermore preferred that the method comprises the step of the electronic relocation detection function monitoring whether the battery is present in the thermostat head of the heat exchanger system, the thermostat head comprising one or more temperature sensors. Preferred features of this step have as well already been described further above in view of the heat exchanger system.

In the following the present invention will be described in further detail by means of exemplary embodiments and referring to the attached figures, in which:
- Fig. 1a+1b: show a heat exchanger system in different states;
- Fig. 2a+2b: show a thermostat head in an embodiment of the heat exchanger system according to the invention in different states;
- Fig. 3a+3b: show different states of a heat exchanger system according to another embodiment;
- Fig. 4a+4b: show another thermostat head in different states; and
- Fig. 5a+5b: show yet another thermostat head for a heat exchanger system in different states.

In the following detailed description and the attached patent claims reference signs were introduced. However, it should be understood that the reference signs shall merely improve readability and are in no way meant to be limiting. Furthermore, it should be understood that the given embodiments are schematic examples only and that further embodiments which are not shown may also be covered by the attached set of patent claims. While the following embodiments only show up to two mounting units for temperature sensors, embodiments comprising three or more mounting units are envisaged.

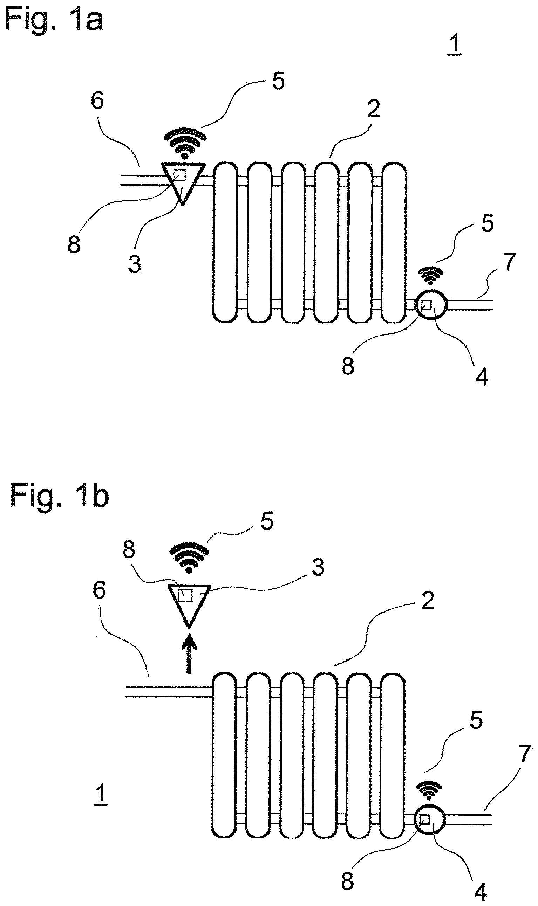

Fig. 1a shows a heat exchanger system 1 in a first state. The heat exchanger system 1 comprises a heat exchanger 2, a thermostat head 3 and a mounting bracket 4. The thermostat head 3 and the mounting bracket 4 are adapted to transfer data between each other by means of a data connection unit via a wireless data connection 5. The thermostat head 3 is mounted to a heat exchanger input pipe 6. The mounting bracket 4 is mounted to a heat exchanger return pipe 7. The thermostat head 3 and the mounting bracket 4 are examples for mounting units.

The heat exchanger system 1 furthermore comprises a temperature sensor arrangement and two electronic relocation detection units 8 being adapted to detect that one or more temperature sensors (not shown in Fig. 1a and 1b) of the temperature sensor arrangement are relocated relative to the heat exchanger 2. Each relocation detection unit 8 is a microprocessor.

As shown in Fig. 1b, the thermostat head 3 may be removed from the input pipe 6. As the thermostat head 3 in this exemplaric embodiment comprises one or more temperature sensors (not shown in Fig. 1a and 1b), the electronic relocation detection unit 8 arranged in the thermostat head 3 detects that the temperature sensors included in the thermostat head 3 are relocated relative to the heat exchanger 2. Another electronic relocation detection unit 8 is in this embodiment included in the mounting bracket 4. When the relocation of the temperature sensors is detected, the electronic relocation detection unit 8 of the thermostat head 3 sends a warning via the wireless data connection 5, in this case to a central data storage server, in order to initiate maintenance and to detect fraud. Thus, a replacement thermostat head 3 can be installed in order to reinstall the relocated temperature sensors.

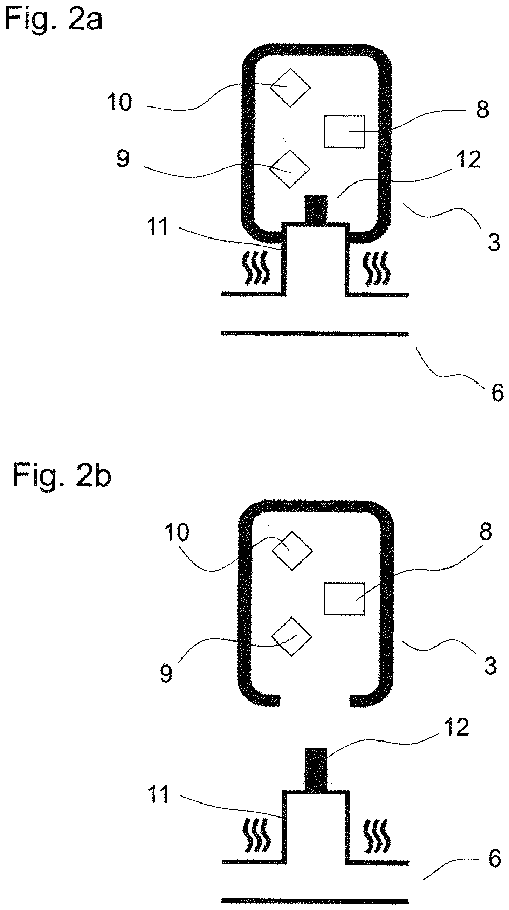

Fig. 2a now shows a thermostat head 3 as it may be, for example, used in the embodiment depicted in Fig. 1a and 1b in more detail. The thermostat head 3 comprises a first temperature sensor 9 and a second temperature sensor 10. The relocation detection unit 8 is arranged in a common assembly together with the first temperature sensor 9 and the second temperature sensor 10, thus in this case in the thermostat head 3. The electronic relocation detection unit 8 is adapted to monitor a change in a first temperature measured by the first temperature sensor 9 and a second temperature measured by the second temperature sensor 10. Furthermore, it is adapted to monitor a temperature difference between the first temperature measured by the first temperature sensor 9 and the second temperature measured by the second temperature sensor 10. When the temperature difference becomes zero, this is taken as an indication that the thermostat head 3 was removed from the heat exchanger inlet pipe 6 together with the first temperature sensor 9 and the second temperature sensor 10, as will be explained in more detail in the following.

As shown in Fig. 2a and 2b the thermostat head 3 is mounted to a valve housing 11 which itself is mounted to the input pipe 6. The thermostat head 3 is adapted to actuate a valve stem 12 in order to actuate a valve element in the valve housing 11. Details are omitted as this function is well known to the person skilled in the art.

As can be seen, the first temperature sensor 9 is arranged closer to the heat exchanger inlet pipe 6 than the second temperature sensor 10. Specifically, the first temperature sensor 9 is arranged thermally connected to the heat exchanger inlet pipe 6, which is illustrated by the six heat radiation waves emitted from the inlet pipe 6, and the second temperature sensor 10 is arranged more distant from the heat exchanger inlet pipe 6 than the first temperature sensor 9 in order to measure a room temperature. Therefore, a predetermined range of temperature differences is to be expected between the first temperature and the second temperature.

When the temperature difference falls below a certain threshold, e.g. in this embodiment reaches zero, this is taken as an indication that the first temperature sensor 9 and the second temperature sensor 10 have been relocated relative to the heat exchanger 2, thus that the thermostat head 3 was removed from the valve housing 11.

This is due to the fact that, as can be understood in view of Fig. 2b, the first temperature sensor 9 will also begin to measure the room temperature once it is more distant from the heat exchanger inlet pipe 6. Thus, the electronic relocation detection unit 8 can send a warning so that maintenance may be initiated.

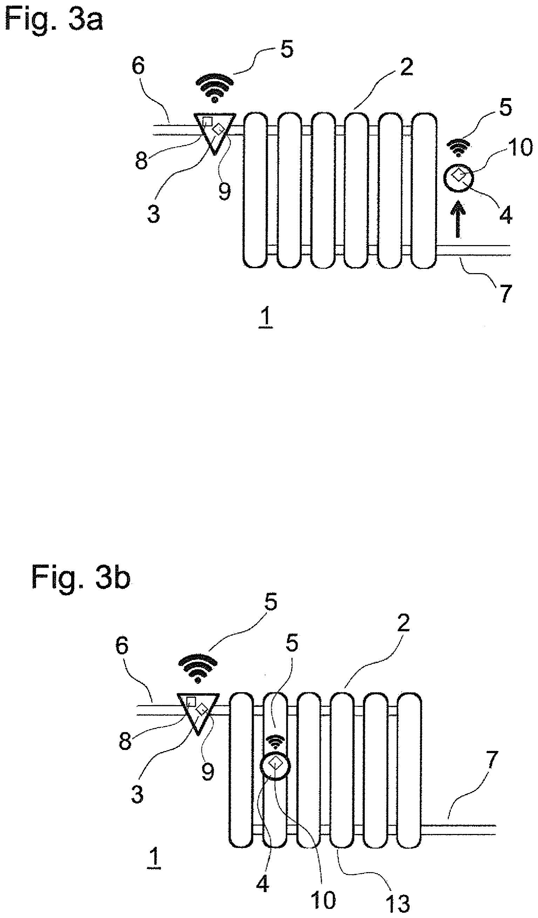

Fig. 3a and 3b show two states of another embodiment of the heat exchanger system 1. In this embodiment, the thermostat head 3 includes the first temperature sensor 9 which is thermally connected to a heat exchanger inlet pipe 6. The mounting bracket 4 comprises the second temperature sensor 10 being arranged thermally connected to the heat exchanger return pipe 7. The thermostat head 3 again comprises the electronic relocation detection unit 8 being adapted to detect whether one or more temperature sensors of the temperature sensor arrangement are relocated relative to the heat exchanger 2. According to
Fig. 3a, the second temperature sensor 10 which shall measure the heat exchanger return temperature at the heat exchanger return pipe 7 is removed from the return pipe 7. Thus, in this embodiment the electronic relocation detection unit 8 of the thermostat head 3 receives the second temperature via the wireless connection 5, detects a change in the temperature difference between the first temperature sensor 9 and the second temperature sensor 10 and takes this as an indication that the second temperature sensor 10 is dismounted from the return pipe 7. Therefore the relocation detection unit sends a warning via the wireless connection 5.

Fig. 3b shows a situation in which the mounting bracket 4 is dismounted from the return pipe 7 and mounted to a rib 13 of the heat exchanger 2. In this exemplary embodiment the electronic relocation detection unit 8 arranged in the thermostat head 3 monitors a temperature response time between the first temperature sensor 9 and the second temperature sensor 10. As in this exemplary embodiment the second temperature sensor 10 was moved closer to the inlet pipe 6, the response time difference between the first temperature sensor 9 and the second temperature sensor 10 decreases. The electronic relocation detection unit 8 detects this decrease in response time and takes this as an indication that the second temperature sensor 10 was moved as furthermore the first temperature remains constant and the second temperature increases. Therefore, a warning is sent via the wireless data connection 5 so that maintenance can be initiated.

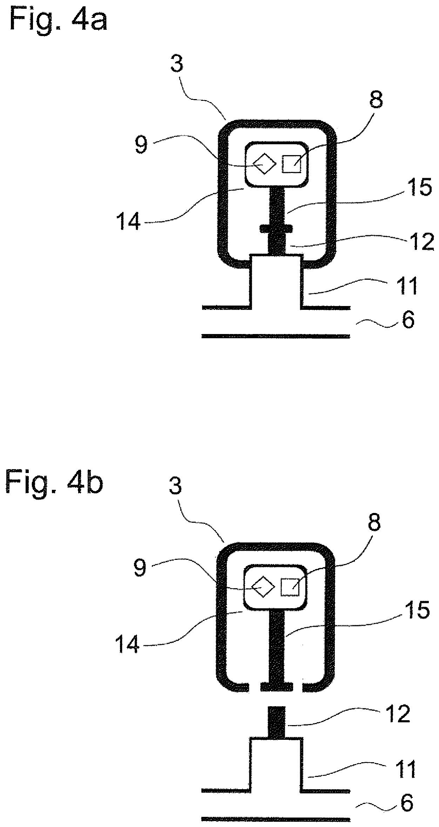

Fig. 4a now shows a further thermostat head 3 for a heat exchanger system 1. Again, this thermostat head 3 comprises the first temperature sensor 9 and the relocation detection unit 8. They are integrated in an electronic unit 14 which is adapted to drive a valve actuator element 15 for controlling a fluid flow through the heat exchanger 2. As can be seen in Fig. 4b, once the thermostat head 3 is removed from the heat exchanger inlet pipe 6 the stroke length of the valve actuator element 15 becomes a maximum stroke length. The relocation detection unit 8 interprets this as an indication that the first temperature sensor 8 was relocated relative to the heat exchanger 2. Thus, the electronic relocation detection unit 8 initiates a warning to be sent via the data connection unit of the electronic unit 14 so as to initiate maintenance. It should be understood that instead of sending a warning over the data connection unit also an acoustic or optical warning could be given, for example a warning sound or a warning light emitted by the thermostat head 3.

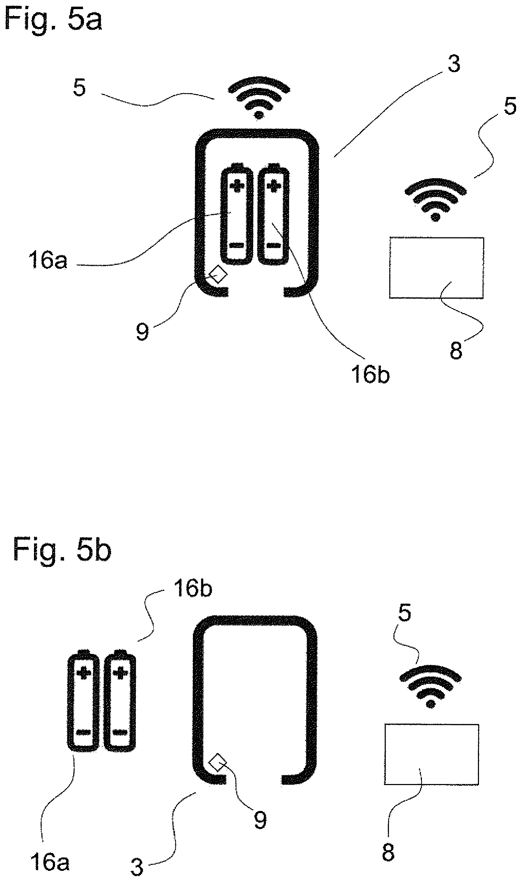

Fig. 5a and 5b show a further thermostat head 3 for a heat exchanger system 1. The shown thermostat head 3 comprises two batteries 16a, 16b. The relocation detection unit 8 is adapted to monitor whether the battery is present in the thermostat head 3. In this embodiment, the relocation detection unit 8 is not arranged in a common assembly together with one or more of the temperature sensors 9, 10 of the temperature sensor arrangement, like the thermostat head 3 or the mounting bracket 4. Instead, the heat exchanger system 1 comprises a remote electronic relocation detection unit 8 detecting whether one or more temperature sensors 9, 10 of the temperature sensor arrangement of the heat exchanger system 1 are relocated relative to the heat exchanger 2. The electronic relocation detection unit 8 is arranged in a central server in this embodiment.

Specifically, the electronic relocation detection unit 8 is adapted to monitor a presence of an electronic signal provided by the data connection unit of the thermostat head 3. As can be seen in Fig. 5b, once the batteries 16a, 16b are removed from the thermostat head 3 the wireless data connection 5 of the thermostat head 3, thus the signal, collapses. The electronic relocation detection unit 8 detects that the electronic signal, thus the wireless data connection 5, is absent and takes this as an indication that the temperature sensor 9 of the temperature sensor arrangement was relocated relative to the heat exchanger 2 as the batteries 16a, 16b can only be removed from the thermostat head 3 when the thermostat head 3 and thus the first temperature sensor 9 is relocated relative to the heat exchanger 2 by removing the thermostat head 3 from the valve housing 11.

Although the above described embodiments have temperature sensor arrangements comprising only one or two temperature sensors, there are also embodiments with three or more temperature sensors. For example, there may then be one or two temperature sensors in the thermostat head 3, as described above, and additional temperature sensors in further mounting units at the same heat exchanger 2. In preferred embodiments, the thermostat head 3 comprises two temperature sensors 9, 10 and at least one additional mounting unit comprises at least one further temperature sensor, like the mounting bracket 4 in Fig. 3a and 3b.

Furthermore, while in the above described embodiments the temperature difference between temperature sensors 9, 10 is taken as an indicator that one or more temperature sensors 9, 10 of the temperature sensor arrangement are relocated relative to the heat exchanger 2, there are embodiments which are not shown in which only the temperature change of one or more temperature sensors is monitored by the electronic relocation detection unit 8 to detect whether one or more temperature sensors 9, 10 of the temperature sensor arrangement are relocated relative to the heat exchanger 2. For example, the electronic relocation detection unit 8 may monitor the temperature change at the first temperature sensor 9. When the valve is opened so that hot fluid flows into the heat exchanger 2 and the first temperature does not increase, the first temperature sensor 9 must have been tampered with, thus it probably was removed.

Thus, it becomes clear that according to the invention a method for detecting a relocation of the temperature sensor 9, 10 in the heat exchanger system 1 is achieved in which the electronic relocation detection unit 8 detects whether the temperature sensor 9, 10 is relocated relative to the heat exchanger 2. This electronic relocation detection function can be reached in different ways, for example by monitoring a temperature change of one or more temperature sensors, like the first temperature sensor 9 and/or the second temperature sensor 10, by monitoring whether a stroke length of the valve actuator element 15 reaches the predetermined stroke length or by monitoring whether the battery 16a, 16b is present in the thermostat head 3 of the heat exchanger system 1, the thermostat head 3 comprising a temperature sensor arrangement.

By having the electronic relocation detection unit 8 adapted to detect whether one or more temperature sensors 9, 10 of the temperature sensor arrangement are relocated relative to the heat exchanger 2, as described above, it becomes possible to allow a good setting for the fluid flow through the heat exchanger 2 which is adequately corresponding to the room temperature as it becomes possible to notice in an easy way when the temperature sensor arrangement is tempered. Thus, mismeasurements of the temperature can be detected, maintenance can be initiated accordingly and/or fraud can be detected.

## Claims

1. A heat exchanger system (1) comprising a heat exchanger (2) and a temperature sensor arrangement,
wherein the temperature sensor arrangement comprises a first temperature sensor (9) and a second temperature sensor (10), at least one electronic relocation detection unit (8) being adapted to monitor a temperature change of at least one temperature measured by at least one of the temperature sensors (9, 10), wherein the temperature sensor measurements lead to a setting for the flow through the heat exchanger,
wherein the first temperature sensor (9) is arranged thermally connected to a heat exchanger inlet pipe (6) and is arranged closer to the heat exchanger inlet pipe (6) than a second temperature sensor (10) and wherein the second temperature sensor (10) is arranged more distant from the heat exchanger inlet pipe (6) than the first temperature sensor (9),
wherein the first temperature sensor (9) and the second temperature sensor (10) are included in a thermostat head (3),
**characterized in that** the heat exchanger system comprises one or more electronic relocation detection units (8) being adapted to detect by monitoring the temperature difference between the first temperature measured by the first temperature sensor (9) and the second temperature measured by the second temperature sensor (10), whether the temperature sensors (9, 10) of the temperature sensor arrangement are relocated relative to the heat exchanger (2).

2. The heat exchanger system according to claim 1, wherein the second temperature sensor (10) is arranged to measure a room temperature.

3. The heat exchanger system according to claim 1 or 2, **characterized in that** the at least one electronic relocation detection unit (8) is adapted to monitor whether a stroke length of a valve actuator element (15) for controlling a fluid flow through the heat exchanger (2) reaches a predetermined stroke length.

4. The heat exchanger system according to claim 3, **characterized in that** the predetermined stroke length equals a maximum stroke length.

5. The heat exchanger system according to any of the claims 1 to 4, **characterized by** the thermostat head (3) for controlling a valve of the heat exchanger (2), the thermostat head (3) further including a battery (16a, 16b), at least one electronic relocation detection unit (8) being adapted to monitor whether the battery is present in the thermostat head (3).

6. The heat exchanger system according to claim 5, **characterized in that** the thermostat head (3) comprises a data connection unit, the at least one electronic relocation detection unit (8) being adapted to monitor a presence of an electronic signal (5) provided by the data connection unit.

7. The heat exchanger system according to any of the claims 1 to 6, **characterized in that** the at least one electronic relocation detection unit (8) is arranged in a common assembly together with one or more of the temperature sensors (9, 10) of the temperature sensor arrangement.

8. A method for detecting a relocation of a temperature sensor (9, 10) in a heat exchanger system (1) comprising a heat exchanger (2) and a temperature sensor arrangement, which comprises a first temperature sensor (9), a second temperature sensor (10), and at least one electronic relocation detection unit (8), wherein the first temperature sensor (9) is arranged thermally connected to a heat exchanger inlet pipe (6) and is arranged closer to the heat exchanger inlet pipe (6) than a second temperature sensor (10) and wherein the second temperature sensor (10) is arranged more distant from the heat exchanger inlet pipe (6) than the first temperature sensor (9), wherein the temperature sensor measurements lead to a setting for the flow through the heat exchanger,
comprising the steps of:
monitoring a temperature change of at least one temperature measured by at least one of the temperature sensors (9, 10) with the at least one electronic relocation detection unit (8),
wherein the temperature sensor measurements lead to a setting for the flow through the heat exchanger,
wherein the first temperature sensor (9) and the second temperature sensor (10) are included in a thermostat head (3).
**characterized in that** an electronic relocation detection function detects by monitoring the temperature difference between the first temperature measured by the first temperature sensor (9) and the second temperature measured by the second temperature sensor (10), whether one or more temperature sensors (9, 10) of the temperature sensor arrangement are relocated relative to the heat exchanger (2).

9. The method according to claim 8, **characterized by** the step of the electronic relocation detection function monitoring whether a stroke length of a valve actuator element (15) reaches a predetermined stroke length.

10. The method according to claim 8 or 9, **characterized by** the step of the electronic relocation detection function monitoring whether a battery is present in a thermostat head (3) of the heat exchanger system (2), the thermostat head (3) comprising a temperature sensors arrangement.

## Patentansprüche

1. Ein Wärmetauschersystem (1), das einen Wärmetauscher (2) und eine Temperatursensoranordnung umfasst,
wobei die Temperatursensoranordnung einen ersten Temperatursensor (9) und einen zweiten Temperatursensor (10), mindestens eine elektronische Verlagerungsdetektionseinheit (8), die ausgebildet ist, um eine Temperaturänderung mindestens einer von mindestens einem der Temperatursensoren (9, 10) gemessenen Temperatur zu überwachen, aufweist, wobei die Temperatursensormessungen zu einer Einstellung für den Durchfluss durch den Wärmetauscher führen,
wobei der erste Temperatursensor (9) in thermischer Verbindung mit einem Wärmetauschereintrittsrohr (6) angeordnet ist und näher am Wärmetauschereintrittsrohr (6) als ein zweiter Temperatursensor (10) angeordnet ist, und wobei der zweite Temperatursensor (10) weiter entfernt vom Wärmetauschereintrittsrohr (6) als der erste Temperatursensor (9) angeordnet ist,
wobei der erste Temperatursensor (9) und der zweite Temperatursensor (10) in einem Thermostatkopf (3) enthalten sind, **dadurch gekennzeichnet, dass** das Wärmetauschersystem eine oder mehrere elektronische Verlagerungsdetektionseinheiten (8) umfasst, die zum Erkennen einer Verlagerung der Temperatursensoren (9, 10) der Temperatursensoranordnung relativ zum Wärmetauscher (2) durch Überwachung der Temperaturdifferenz zwischen der vom ersten Temperatursensor (9) gemessenen ersten Temperatur und der vom zweiten Temperatursensor (10) gemessenen zweiten Temperatur ausgebildet sind.

2. Wärmetauschersystem nach Anspruch 1, wobei der zweite Temperatursensor (10) zur Messung einer Raumtemperatur ausgebildet ist.

3. Wärmetauschersystem nach Anspruch 1 oder 2, **dadurch gekennzeichnet, dass** die mindestens eine elektronische Verlagerungsdetektionseinheit (8) zum Überwachen, ob eine Hublänge eines Ventilbetätigungselements (15) zur Steuerung eines Fluidstroms durch den Wärmetauscher (2) eine vorbestimmte Hublänge erreicht, ausgebildet ist.

4. Wärmetauschersystem nach Anspruch 3, **dadurch gekennzeichnet, dass** die vorgegebene Hublänge gleich einer maximalen Hublänge ist.

5. Wärmetauschersystem nach einem der Ansprüche 1 bis 4, **gekennzeichnet durch** den Thermostatkopf (3) zur Steuerung eines Ventils des Wärmetauschers (2), wobei der Thermostatkopf (3) ferner eine Batterie (16a, 16b) enthält, wobei mindestens eine elektronische Verlagerungsdetektionseinheit (8) zum Überwachen, ob die Batterie in dem Thermostatkopf (3) vorhanden ist, ausgebildet ist.

6. Wärmetauschersystem nach Anspruch 5, **dadurch gekennzeichnet, dass** der Thermostatkopf (3) eine Datenverbindungseinheit umfasst, wobei die mindestens eine elektronische Verlagerungsdetektionseinheit (8) zum Überwachen des Vorhandenseins eines von der Datenverbindungseinheit gelieferten elektronischen Signals (5) ausgebildet ist.

7. Wärmetauschersystem nach einem der Ansprüche 1 bis 6, **dadurch gekennzeichnet, dass** die mindestens eine elektronische Verlagerungsdetektionseinheit (8) in einer gemeinsamen Baugruppe mit einem oder mehreren der Temperatursensoren (9, 10) der Temperatursensoranordnung angeordnet ist.

8. Verfahren zur Detektion einer Verlegung eines Temperatursensors (9, 10) in einem Wärmetauschersystem (1) umfassend einen Wärmetauscher (2) und eine Temperatursensoranordnung, die einen ersten Temperatursensor (9), einen zweiten Temperatursensor (10) und mindestens eine elektronische Verlegungsdetektionseinheit (8) umfasst, wobei der erste Temperatursensor (9) in thermischer Verbindung mit einem Wärmetauschereintrittsrohr (6) angeordnet ist und näher am Wärmetauschereintrittsrohr (6) als ein zweiter Temperatursensor (10) angeordnet ist und wobei der zweite Temperatursensor (10) weiter vom Wärmetauschereintrittsrohr (6) entfernt als der erste Temperatursensor (9) angeordnet ist, wobei die Temperatursensormessungen zu einer Einstellung für die Durchströmung des Wärmetauschers führen,
umfassend die Schritte:
Überwachen einer Temperaturänderung mindestens einer von mindestens einem der Temperatursensoren (9, 10) gemessenen Temperatur mit der mindestens einen elektronischen Verlagerungsdetektionseinheit (8),
wobei die Temperatursensormessungen zu einer Einstellung für den Durchfluss durch den Wärmetauscher führen,
wobei der erste Temperatursensor (9) und der zweite Temperatursensor (10) in einem Thermostatkopf (3) enthalten sind. **dadurch gekennzeichnet, dass** eine elektronische Verlagerungsdetektionsfunktion durch Überwachung der Temperaturdifferenz zwischen der von dem ersten Temperatursensor (9) gemessenen ersten Temperatur und der von dem zweiten Temperatursensor (10) gemessenen zweiten Temperatur erkennt, ob ein oder mehrere Temperatursensoren (9, 10) der Temperatursensoranordnung relativ zum Wärmetauscher (2) verlagert sind.

9. Verfahren nach Anspruch 8, **gekennzeichnet durch** den Schritt, dass die elektronische Verlagerungsdetektionsfunktion überwacht, ob eine Hublänge eines Ventilbetätigungselements (15) eine vorbestimmte Hublänge erreicht.

10. Verfahren nach Anspruch 8 oder 9, **gekennzeichnet durch** den Schritt, dass die elektronische Verlagerungsdetektionsfunktion überwacht, ob eine Batterie in einem Thermostatkopf (3) des Wärmetauschersystems (2) vorhanden ist, wobei der Thermostatkopf (3) eine Temperatursensoranordnung umfasst.

## Revendications

1. Système d'échangeur de chaleur (1) comprenant un échangeur de chaleur (2) et un agencement de capteur de température,
dans lequel l'agencement de capteurs de température comprend un premier capteur de température (9) et un second capteur de température (10), au moins une unité électronique de détection de relocalisation (8) étant adaptée pour surveiller un changement de température d'au moins une température mesurée par au moins l'un des capteurs de température (9, 10), dans lequel les mesures du capteur de température conduisent à un réglage pour le flux à travers l'échangeur de chaleur,
dans lequel le premier capteur de température (9) est disposé thermiquement connecté à un tuyau d'entrée d'échangeur de chaleur (6) et est disposé plus près du tuyau d'entrée d'échangeur de chaleur (6) qu'un second capteur de température (10) et dans lequel le second capteur de température (10) est disposé plus loin du tuyau d'entrée d'échangeur de chaleur (6) que le premier capteur de température (9),
dans lequel le premier capteur de température (9) et le second capteur de température (10) sont inclus dans une tête de thermostat (3),
**caractérisé en ce que** le système d'échangeur de chaleur comprend une ou plusieurs unités électroniques de détection de relocalisation (8) adaptées pour détecter, en surveillant la différence de température entre la première température mesurée par le premier capteur de température (9) et la seconde température mesurée par le second capteur de température (10), si les capteurs de température (9, 10) de l'agencement de capteurs de température sont relocalisés par rapport à l'échangeur de chaleur (2).

2. Système d'échangeur de chaleur selon la revendication 1, dans lequel le second capteur de température (10) est agencé pour mesurer une température ambiante.

3. Système d'échangeur de chaleur selon la revendication 1 ou 2, **caractérisé en ce que** l'au moins une unité de détection de relocalisation électronique (8) est adaptée pour surveiller si une longueur de course d'un élément d'actionneur de soupape (15) pour contrôler un écoulement de fluide à travers l'échangeur de chaleur (2) atteint une longueur de course prédéterminée.

4. Système d'échangeur de chaleur selon la revendication 3, **caractérisé en ce que** la longueur de course prédéterminée est égale à une longueur de course maximale.

5. Système d'échangeur de chaleur selon l'une quelconque des revendications 1 à 4, **caractérisé par** la tête de thermostat (3) pour commander une soupape de l'échangeur de chaleur (2), la tête de thermostat (3) comprenant en outre une batterie (16a, 16b), au moins une unité électronique de détection de relocalisation (8) étant adaptée pour surveiller si la batterie est présente dans la tête de thermostat (3).

6. Système d'échangeur de chaleur selon la revendication 5, **caractérisé en ce que** la tête de thermostat (3) comprend une unité de connexion de données, l'au moins une unité de détection de relocalisation électronique (8) étant adaptée pour surveiller une présence d'un signal électronique (5) fourni par l'unité de connexion de données.

7. Système d'échangeur de chaleur selon l'une quelconque des revendications 1 à 6, **caractérisé en ce que** l'au moins une unité électronique de détection de relocalisation (8) est disposée dans un ensemble commun avec un ou plusieurs des capteurs de température (9, 10) de l'agencement de capteurs de température.

8. Procédé pour détecter une relocalisation d'un capteur de température (9, 10) dans un système d'échangeur de chaleur (1) comprenant un échangeur de chaleur (2) et un agencement de capteur de température, qui comprend un premier capteur de température (9), un second capteur de température (10), et au moins une unité électronique de détection de relocalisation (8), dans lequel le premier capteur de température (9) est disposé thermiquement connecté à un tuyau d'entrée de l'échangeur de chaleur (6) et est disposé plus près du tuyau d'entrée de l'échangeur de chaleur (6) qu'un second capteur de température (10) et dans lequel le second capteur de température (10) est disposé plus loin du tuyau d'entrée de l'échangeur de chaleur (6) que le premier capteur de température (9), dans lequel les mesures du capteur de température conduisent à un réglage pour le flux à travers l'échangeur de chaleur,
comprenant les étapes consistant à :
surveillance d'un changement de température d'au moins une température mesurée par au moins un des capteurs de température (9, 10) avec l'au moins une unité électronique de détection de relocalisation (8),
dans lequel les mesures du capteur de température conduisent à un réglage pour le flux à travers l'échangeur de chaleur,
dans lequel le premier capteur de température (9) et le second capteur de température (10) sont inclus dans une tête de thermostat (3).
**caractérisé en ce qu'**une fonction de détection de relocalisation électronique détecte, en surveillant la différence de température entre la première température mesurée par le premier capteur de température (9) et la seconde température mesurée par le second capteur de température (10), si un ou plusieurs capteurs de température (9, 10) de l'agencement de capteurs de température sont relocalisés par rapport à l'échangeur de chaleur (2).

9. Procédé selon la revendication 8, **caractérisé par** l'étape consistant à ce que la fonction de détection de relocalisation électronique surveille si une longueur de course d'un élément d'actionnement de soupape (15) atteint une longueur de course prédéterminée.

10. Procédé selon la revendication 8 ou 9, **caractérisé par** l'étape consistant à ce que la fonction de détection de relocalisation électronique contrôle si une batterie est présente dans une tête de thermostat (3) du système d'échangeur de chaleur (2), la tête de thermostat (3) comprenant un agencement de capteurs de température.
